(19) Europäisches Patentamt
European Patent Office
Office européen des brevets

(11) **EP 4 159 825 A1**

(12) **EUROPEAN PATENT APPLICATION**

(43) Date of publication:
**05.04.2023 Bulletin 2023/14**

(21) Application number: **22198965.0**

(22) Date of filing: **30.09.2022**

(51) International Patent Classification (IPC):
**C09K 3/18** *(2006.01)*

(52) Cooperative Patent Classification (CPC):
**C09K 3/18**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 IT 202100025154**

(71) Applicant: **Università degli Studi di Parma**
**43121 Parma (IT)**

(72) Inventors:
- **GIULIANI, Felice**
  **43126 Parma (IT)**
- **LONGO, Sandro Giovanni**
  **43121 Parma (IT)**
- **AUTELIANO, Federico**
  **43122 Parma (IT)**
- **PETROLO, Diana**
  **43121 Parma (IT)**

(74) Representative: **Rapisardi, Mariacristina**
**Ufficio Brevetti Rapisardi S.r.l.**
**Via Serbelloni, 12**
**20122 Milano (IT)**

(54) **ANTI-ICING SOLUTION FOR THE WINTER MAINTENANCE OF OPEN-GRADED OR HIGH MACRO-TEXTURED ASPHALT PAVEMENTS**

(57) An anti-icing solution for the winter maintenance of open-graded or high macro-textured asphalt pavements, characterized in that it comprises a mixture of water, at least one saline solute capable of reducing the freezing point of the mixture and at least one bio-based gelling agent comprising agarose and/or pectin, wherein said gelling agent is contained in the mixture in an effective amount for the thermo-reversible transition of the mixture from a liquid state to a gelatinous state in a cooling process and vice versa in a heating process.

EP 4 159 825 A1

FIG. 1

**Description**

The present invention relates to an anti-icing solution for the winter maintenance of open-graded or high macro-textured road asphalt pavements.

In the winter season or in cold regions, where for significant periods of the year the presence of low ambient temperatures occurs, it is necessary to arrange specific road maintenance operations for ensuring road mobility and the safe transit of motor vehicles.

Intelligent road weather information systems dedicated to the road winter maintenance are widely used to acquire and predict in advance the air and road surface temperatures for the best and timely prevention of ice formation on the road surface (anti-icing strategy) and/or the rapid removal thereof (de-icing strategy).

The purpose is to maintain the safe tyre-pavement interaction, in the best friction conditions, compatible with the adverse weather phenomenon.

Anti-icing interventions are known which generally involve the spreading of chemical freezing-point depressants, e.g. salts such as sodium chloride ($NaCl$), calcium chloride ($CaCl_2$) or magnesium chloride ($MgCl_2$) and/or abrasives (sand, gravel).

If their application timely occurs, that is just before or during the early phase of the snow/frost event, the salt in solution reduces the freezing point of the water or of the environmental moisture, thus preventing the formation of ice in relation to the saline content, theoretically up to a minimum temperature (eutectic point) depending on the type and amount of the used salt (about -21°C to 23.3% for NaCl).

The choice of the best timing for these interventions depends on many factors, such as, for example, the ambient temperature and humidity, the solar radiation, the wind direction and speed, as well as the topography, the road network characteristics, (cut, embankment or bridge deck) and the traffic volume in relation to the level of service to be ensured on that road infrastructure.

It is known that the effectiveness of such interventions also depends on the type of pavement exposed to snow risk.

The so-called open-graded or porous road asphalt pavements, for example, consist of at least one surface layer made of an open-graded asphalt mixture , composed of mainly uniform size stone aggregates and a very high content of interconnected voids (generally greater than 16%).

The porous layer is placed on a waterproofing film of pure bitumen or bituminous emulsion. Under optimal conditions, the high porosity of these road surfaces ensures the water to rapid flow through the layer itself and to be then directed to the sides of the roadway and permanently moved away from the road platform.

Open-graded or porous pavements also contribute to the noise reduction emitted by the rolling of tyres.

However, open-graded or porous pavements are particularly sensitive to harsh climates: snow tends to accumulate faster in the most exposed pores, and ice or packed snow thaws slower and re-freezes more quickly due to the low conductivity and thermal inertia of the porous matrix. Thus, it is known that it is difficult to effectively use traditional liquid brines on such types of pavements, due to their quick drainage through the pores. It is also known that spreading dry granular particles of salts can lead to the loss of the finer fractions through the passage inside the pores.

Indeed, the surface layer of the pavement will not be adequately protected from the ice formation.

This results in a significant increase in the amount of freezing point depressant to be spread and a remarkable increase in the overall maintenance costs.

As an example, a growth of about 30% to 50% in salt consumption has been estimated and observed on the European highway networks

Moreover, it is also known that the use of abrasives is not recommended as they tend to clog the pores almost always irreversibly.

The increase in the amounts of salts or liquid brines on the open-graded road surfaces also has serious consequences for the durability of structural works, primarily bridges (for example, the corrosion of metal components, the rapid degradation of reinforced concrete structures) and the environment (for example, the damage of vegetation and the pollution of water supply sources). There is therefore the need to identify alternative green and eco-friendly solutions, which further protect the environment and are more economic for an objective saving in the supply of the deicers and for the better management of the processes.

The technical task addressed by the present invention is accordingly to formulate an anti-icing solution for the winter maintenance of open-graded or high macro-textured asphalt pavements which enables the reported drawbacks to be eliminated.

As part of this technical task, an object of the invention is to create an anti-icing solution for the winter maintenance of open-graded or high macro-textured asphalt pavements which has a double function of anti-icing and temporary sealant.

Another object of the invention is to create an anti-icing solution for the winter maintenance of open-graded or high macro-textured asphalt pavements with a reduced polluting impact.

Another object of the invention is to make an anti-icing solution for the winter maintenance of open-graded or high macro-textured asphalt pavements which, by rationalizing the use of salt, decreases the negative impact of the winter maintenance operations on the durability of structures.

Another object is to create an anti-icing solution for the winter maintenance of open-graded or high macro-textured asphalt pavements which allows the retention of a good uniformity of the salt content on the pavement by reducing the amount of dry granular particles blown off target surface by the passage of vehicles.

Last but not least, an object of the invention is to create an anti-icing solution for the winter maintenance of open-graded or high macro-textured asphalt pavements which has a low unit treatment cost and allows the reduction (or not necessity) in the number of following interventions after the first application.

The technical task, together with these and other objects according to the present invention, are attained by making an anti-icing solution for the winter maintenance of open-graded or high macro-textured asphalt pavements, characterized in that it comprises a mixture of water, at least one saline solute capable of reducing the freezing point of the mixture and at least one bio-based gelling agent, comprising agarose and/o pectin, where said gelling agent is contained in the solution in an effective amount for the thermo-reversible transition of the solution from a liquid state to a gelatinous state in a cooling process and vice versa in a heating process.

In a preferred embodiment, said gelling agent is contained in the mixture in an effective amount for the repeated thermo-reversible transition of the mixture from a liquid state to a gelatinous state in a cooling process and vice versa in a heating process.

In a preferred embodiment, the gelling agent is contained in the solution in a percentage from 0.1% to 3.0% by weight of water

Even more preferably, said effective amount of said gelling agent in said solution is comprised between 0.5% and 2.0% by weight of water.

The bio-based gelling agent can be a waste, a scrap or a by-product of natural substances.

In a preferred embodiment, the bio-based gelling agent originates from seaweeds (algae) fibres.

In a preferred embodiment, the saline solute is NaCl.

In a preferred embodiment, the saline solute is contained in the solution in a percentage from 0.1% to 25.0% by weight of water.

The present invention also discloses a method for applying an anti-icing solution as claimed, where the solution is stored in a solid or liquid phase at a temperature higher the gelation point, and where such a solution, possibly after having been liquefied if stored in a solid phase, is sprayed on the road pavement by nebulization by with or without compressed air.

Further characteristics and advantages of the invention will more fully emerge from the description of a preferred but not exclusive embodiment of the anti-icing solution according to the invention, illustrated by way of non-limiting example in the appended drawings, in which:

figure 1 shows a DSC thermogram of the 23.3% NaCl brine added with 2% seaweed (algae) fibre;
figure 2 shows a DSC thermogram of the 23.3% NaCl brine;
figure 3 shows the temperature-dependent viscosity of the bio-based anti-icing mixture, with a salt content of 23.3%
figure 4 shows the strain amplitude sweep results of the bio-based anti-icing mixture;
figure 5 shows the trend of the complex modulus as a function of frequency, for the bio-based anti-icing mixture with a salt content of 23.3%, at T = -2°C;
figure 6 shows the trend of the complex modulus as a function of frequency, for the bio-based anti-icing mixture with a salt content of 2.2%, at T = -2°C;
figure 7 shows the appearance of an open-graded asphalt specimen immediately after application of the anti-icing mixture and after 6 hours stored at T = 2 °C;
figure 8 shows the pavement (a)untreated, (b) single sprayed (c) double sprayed.
figure 9 shows the spraying system.

With reference to the aforementioned figures, the invention object of the patent is now described in detail.

In particular, the invention shows an anti-icing solution for the winter maintenance of open-graded or high macro-textured asphalt pavements comprising a mixture of water, at least one saline solute capable of reducing the freezing point of the mixture and at least one gelling agent of plant origin. In particular, the gelling agent is contained in the mixture in an effective amount for the thermo-reversible transition of the mixture from a liquid state to a gelatinous state in a cooling process and vice versa in a heating process.

The solution is a fluid with thermo-conditioned rheological behaviour, with non-Newtonian characteristics at melting temperature, used to temporarily seal the macro-pores of the open-graded asphalt pavements.

One of the most advantage of such a solution is its dual function: the first autonomous function is the anti-icing action due to the freezing point depression potential of salt and a second indirect function is the sealing action ensuring the reduction of drainage of the salt derived from a possible standard treatment performed using chemical agents in dry or liquid forms.

The fluid can be hot-sprayed using spray systems, which are normally adopted for the realizations of tack coats or for the impregnation of untreated surfaces, equipped with nozzles capable to ensure the necessary flow also when the vehicle speed is about 30 km/h; at temperatures lower than about 50°C the fluid begins to form a gel-like structure, with an initially Herschel-Bulkley-like behaviour, temporarily sealing road surface pores and reducing the permeability thereof. According to the present invention, the anti-icing solution contains biopolymer chains and is subject to natural degradation, is not polluting, is non-toxic, can be industrially produced with standard sequences of unitary processes.

The operating principle of the anti-icing solution according to the present invention requires:

(i) creating mixtures of biopolymer substances, with shear-thinning behaviour and gelation temperature such as to allow the hot spreading/spraying on the pavement surface with methodologies normally used in other road technology operations;
(ii) ensuring the adhesion of such mixtures in contact with the open-graded road surface.

In order to allow an industrial development, the raw material must consist of low-cost and nonpolluting substances, which do not require their removal at the end of the critical weather event and do not excessively reduce the hydraulic conductivity of the road surface, are easily workable and biodegradable.

The anti-icing solution according to the present invention comprises a hot-prepared water-based fluid (> 80°C), which form a gel in contact with the cold road pavement.

The mixture consists of water, solute (in particular NaCl content from 0% to 25% w/w) and a bio-based gelling agent.

In particular, the gelling agent is a waste, scrap or by-product of natural substances.

More in particular, the gelling agent is an algae.

For example, sea or lake algae, agricultural-derived co-products, by-products from the processing of vegetables or from the food, cosmetic and pharmaceutical industries containing significant contents of gelling substances (e.g., agarose, pectin, etc.) can be used as gelling agents.

The present invention has been developed starting from a formulation which exploits the thickening and gelling properties of the wall-cell polysaccharides contained in the algae fibres, which constitute the solute.

The used seaweeds are those collected on beaches during waterfront cleaning operations, so as not to cause any damage to the ecosystem.

The increase in viscosity and the ability to gel allow this mixture to temporarily reduce the hydraulic conductivity of the pavement for the period of the ice emergency (a few hours, typically those at night) remaining on the surface, and thus without directly draining inside the pavement structure and at the same time ensuring the necessary surface friction due to the maintenance of the intrinsic macro-texture of the surface.

The liquid film to be applied (in the form of a spray) is very thin, of the order of a few tens of microns.

At the end of the emergency period or of its necessity, the liquid degrades due to evaporation or the action of the wind and the porous pavement recovers the initial hydraulic conductivity.

ANTI-ICING SOLUTION PREPARATION EXAMPLE

The mixture was prepared by adding small amounts of thickener to a brine, consisting of water and sodium chloride.

The brine specifically has a sea salt content ranging from 0% to 23.3% by weight (content at which the solution reaches the eutectic point).

The thickener used was an algae fibre in the form of very fine powder with a pale white-yellow colour, obtained by steam explosion, vacuum drying and subsequent grinding of red sea algae (phylum: Rhodophyta) "ogonori" (genus: Gracilaria verrucosa). It is one of the same algal genera from which agar-agar (or simply agar) , i.e., a gelatinous colloid used in the food and pharmaceutical industry as a gelling and stabilizing agent, extracted after various refining treatments.

The obtained mixture is semi-transparent and comes as a liquid solution at temperatures above the complete melting temperature (T = 85 °C ÷ 95 °C) and a compact gel at lower temperatures (below T = 35 °C ÷ 45 °C). The solubility of the algae fibre within the mixture depends on the mixing temperature.

At low temperatures, insoluble algae particles settle immediately after the mixing process is interrupted.

The solubility of the particles partially increases with the temperature, but only considering preparations above 80 °C ÷ 85 °C the solution form a firm gel structure upon cooling. Advantageously, the process is thermo-reversible, i.e., the cold-gel solution returns to the liquid state after subsequent heating.

The gelling ability also depends on the amount of algae: content comprised between 0.2% ÷ 0.5% by weight of water do not produce a gel after cooling, while amounts greater than 5% give the mixture a pasty consistency, excessive for the purpose.

An algae content equal to 2% by weight of water in a 23.3% salt brine (by weight of water) is the optimal dosage in terms of performance.

A typical sample was obtained by mixing the gellant (2.3 g of algae fibre), into 150 g of 23.3% salt brine (thus 114.9 g of water and 35.1 g of salt).

The type of mineral water used for the preparation of the samples was pre-fixed to limit the number of system variables.

The mixing temperature is 90°C $\pm$ 5°C. The stirring occurs for 5 minutes at 1000 rpm inside a 350 ml sealed glass container.

ANTI-ICING SOLUTION BEHAVIOUR ANALYSIS UNDER DIFFERENT CONDITIONS OF USE

The anti-icing solution object of the present invention has a thermo-dependent rheological behaviour, which is studied in the laboratory by thermal and rheometric measurements in relation to the proportions of the ingredients used and the possible stresses expected in the different steps of production, handling, storage, application and permanence on the pavement surface.

The maintenance of the characteristics after heating and cooling cycles was also analysed by means of differential scanning calorimetry tests.

Once the behaviour of the fluid was defined, it is analysed in detail how its application can affect one of the peculiar properties of the open-graded and porous surfaces, namely the hydraulic conductivity.

*Differential scanning calorimetry analysis*

Differential scanning calorimetry (DSC) is an instrumental technique which is capable of recording the energy (heat flows) associated with the thermal transitions which occur in a sample when it is subjected to dynamic heating/cooling conditions.

Such heat flows are determined as a function of a reference which, thermally stressed in the same conditions of the tested sample but differently responding, allows to obtain a differential signal. The thermo-analysis was useful both for determining the possible ability of the organic compound (seaweed fibre) to lower the freezing point of the fluid, and for identifying some temperatures of practical interest, such as that of melting and gelation.

The measurements were performed using a DSC Q100 unit (TA Instruments, USA).

The test specifications included the analysis of a small amount of product (45 $\pm$ 1 mg), which was inserted inside a hermetically sealed aluminium pan.

The calibration of the instrument was performed with indium (melting temperature 156.60 °C, $\Delta H_f$ = 28.45 J/g) and mercury (melting temperature -38.83 °C, $\Delta H_f$ = 11.41 J/g), while a second empty pan was used as reference.

To study the behaviour of the brine near the freezing point, the test cycle included a first isothermal phase at 25 °C for 5 minutes, subsequent cooling up to -45 °C (cooling rate of 2 °C/minute), followed by an isothermal stabilization at -45 °C for 3 minutes and heating at 10 °C at the same rate.

Furthermore, to determine the physical gelation and melting mechanisms, a heating-cooling cycle was carried out in the temperature range 10-130 °C: after a first isothermal conditioning at 10 °C for 2 minutes, a heating at 130 °C (heating speed of 5 °C /minute) was carried out, and then stabilization at 130 °C for 2 minutes and, finally, cooling at 10 °C at the same rate.

The entire cycle was repeated three times to verify and quantitatively measure the thermo-reversibility of the phase transitions.

*Rheological analysis*

In the rheological study of the material, a first part of the tests had the objective of characterizing the thermo-sensitive behaviour of the mixtures during the cooling downstream of the production process.

It was therefore decided to measure the temperature-dependent rotational complex viscosity ($\eta^*$). Being the mixture initially in the liquid state, an Ares rheometer (TA Instruments, USA), equipped with a coaxial cylinders measuring system (inner cylinder with a diameter of 32 mm and an outer one with a diameter of 34 mm), was used in a Couette rotational flow field.

The test was carried out in a strain-controlled configuration maintaining a constant shear rate of 50 s$^{-1}$, reducing the temperature of the material and measuring the viscosity value thereof.

The results of this test were useful to identify the most significant temperature ranges, i.e., those for which the transition from liquid to gel occurs, which inevitably influence and govern the most correct application method of this product.

The second part of the measurements, performed with a Physica MCR 502 dynamic shear rheometer (Anton Paar, Austria), allowed to evaluate the properties of the products once in place at very low temperatures to better understand their behaviour after gelling.

A 25 mm parallel-plate measuring system was selected, using crosshatched surfaces to counteract the wall slip effects.

Oscillatory amplitude sweep tests were carried out to determine the limits of linear visco-elastic region, and frequency sweep tests were performed to evaluate the stiffness of the mixture at very low temperatures in terms of complex modulus (G*) and its storage (G') and loss (G") components. In the first step, a shear strain amplitude ($\gamma$) of 0.1 to 100% was considered, maintaining a constant angular frequency ($\omega$) of 10 Hz at a temperature of -12 °C.

The frequency sweep tests were performed in the linear viscoelasticity regime at three temperatures (2, -2 and -12 °C), selecting a decreasing logarithmic ramp for the angular frequency from 16 to 0.1 Hz.

*Permeability tests*

The specific formulation of the open-graded asphalt mixtures leads to a high intergranular porosity, which allows to significantly improve the stormwater flow from the roadway resulting in environmental and safety benefits for the road users.

The evaluation of the effects that the application of a salt hydrogel can cause on a porous pavement, included the measurement of the residual hydraulic conductivity of the specimens with two different fluids, i.e., water and air.

In fact, an original assessment of the air hydraulic conductivity was also added to the traditional measurement of the water one. This approach was used to avoid that the measurements could be affected by the presence of water, and for comparing two techniques as an indirect evaluation of the evolution of the mixture upon contact with water.

Open-graded hot mix asphalt (HMA) specimens (hereinafter referred to as specimens) were prepared in laboratory to perform the hydraulic conductivity tests.

The experimental set-up for measuring the air hydraulic conductivity of HMA specimens is described in detail in Giuliani et al. 2021 (Giuliani, F., Petrolo, D., Chiapponi, L., Zanini, A., Longo, S., 2021. Advancement in measuring the hydraulic conductivity of porous asphalt pavements. Construction and Building Materials, 300, 124110).

The hydraulic conductivity was measured using Darcy's law:

$$V = -k \cdot i,$$

where:

- V: apparent velocity (Darcian) of the fluid, which can also be expressed as the ratio between the flow rate Q and the surface area of the specimen A;
- k: hydraulic conductivity expressed in m/s;
- i: hydraulic gradient, which can be expressed as the ratio between the variation of the hydraulic load $\Delta H$ and the length of the section travelled by the fluid $\Delta x$ (it is the thickness L of the specimen).

Considering that V = Q/A and assuming that the variation of the hydraulic load is essentially due to the variation of the piezometric height $\Delta p/\gamma$, the hydraulic conductivity k is obtained by:

$$k = \frac{Q}{A} \cdot \frac{\gamma L}{\Delta p}.$$

When the introduced air flow rate Q varies, the differential pressure $\Delta p$ between the up and bottom surface of the specimen is measured. The ratio Q/$\Delta p$ is constant for low flow rate values, and the volumetric air flow Q, compared to water, is within the limits of the rainfall flows which affect porous pavements in the winter periods.

The same specimens, previously subjected to the air permeability measurement, were subjected to an evaluation of the water hydraulic conductivity using a constant head permeameter.

The specimen was placed at the downflow end of a pipe and fixed by means of a metallic rod. An external tube, closed in the lower part and open in the upper part, kept the constant downstream head, determined by the water overflow level from the upper part.

The excess water is collected in a tank and recirculated by a pump which controls the water flow rate to be dispensed into the internal tube containing the specimen.

For each predetermined water flow rate value, the stationary conditions are expected to be reached, with a constant downstream and upstream heads.

The upstream hydraulic heads measured using a graduated piezometer, placed near the upper surface of the specimen. The specimen is completely immersed in water to guarantee a correct measurement, since it avoids the formation of air bubbles which could get trapped in the pores within the specimen affecting the measurements.

The measurements of water hydraulic conductivity t Kw was completely similar to that of air. Darcy's law was used, but in this case the total head hydraulic variation $\Delta H$ between the upstream and downstream section of the specimen is directly known.

In the hydraulic conductivity evaluation, the propagation of the error was taken into account with an uncertainty on the flow rate of 0.002 l/s, on the thickness of the specimen of 0.04 cm and on the head hydraulic variation $\Delta H$ of 0.2 cm.

The total uncertainty on the constant Kw is equal to about 5%.

ANALYSIS OF THE EXPERIMENTAL RESULTS

*Differential scanning calorimetry*

The processing of the data measured in the differential scanning calorimetry tests was performed using the Advantage/Universal Analysis software version 4.5A (TA Instruments, USA). Thermal analysis measures the effects of the energy exchange between the environment and the material, which translates into a variation of the heat flows associated with the thermal transitions and plotted in a thermogram.

This representation shows in the x-axis the temperature expressed in °C and in the y-axis the heat flow in W/g.

The curves therefore represent endothermic and exothermic peaks, whose area is proportional to the enthalpy absorbed or transferred by the sample during a phase transition.

The position of the peaks in a temperature scan depends on the properties and nature of the studied material.

Specifically, the characteristic temperature ($T_c$), i.e., the temperature associated with the peak of the phase transition, and the latent heat or enthalpy ($\Delta H$), which represents the area underlying the curve between the onset ($T_{on}$) and offset ($T_{off}$) temperatures of the transition, were determined. For the evaluation of the behaviour of the salt mixture added with algae fibre at very low temperatures (T < 0°C), comparable with those detectable in operation during the winter period, only the heating phase tracks, i.e., the curves below the baseline, were analysed.

In fact, the freezing curve (drawn above the baseline) is not significant, as it is strongly influenced by the super-cooling effect.

Brines containing high levels of sodium chloride (20-25 %) with or without gelling agent, as well as solutions obtained using only water as solvent, show superimposable thermograms, characterized by a very clear phase transition (more diluted NaCl brines show two phase transitions, with peaks of comparable intensity) and very similar thermal properties.

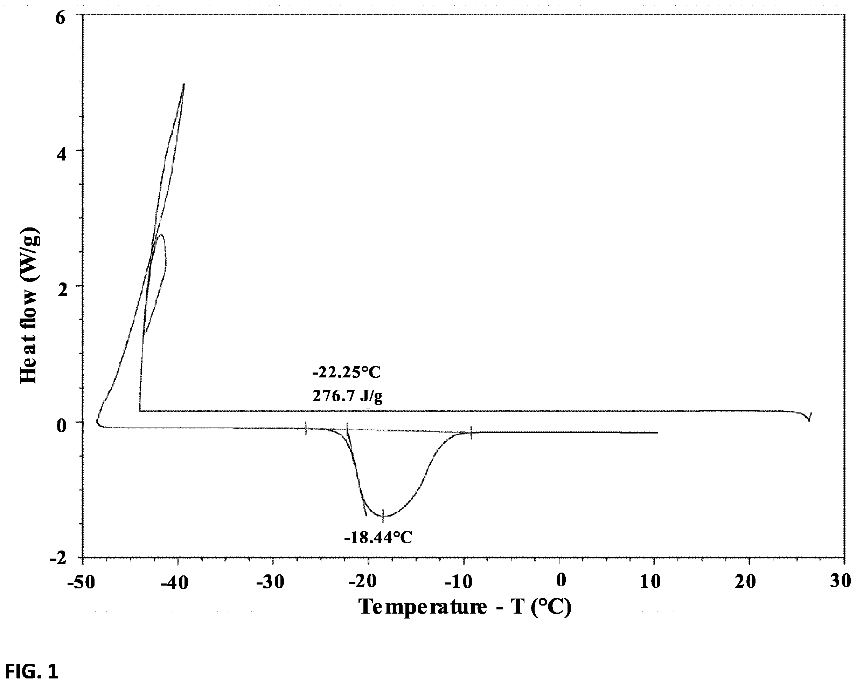

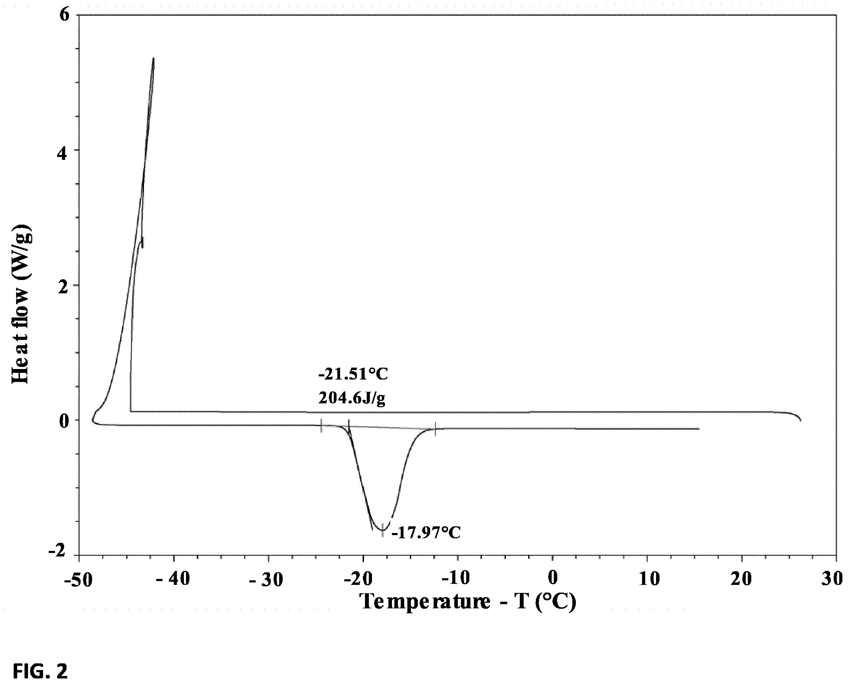

The thermograms related to the bio-based anti-icing mixture and the brine with a salt content of 23.3% are shown in figures 1 and 2, respectively. Such trends suggest that the gelling agent is not able to act as a further freezing point depressant and does not affect the thermal properties of the solvent.

The small difference in temperature between the freezing points of the two mixtures (with and without gellent) is comparable to the instrumental sensitivity.

The thermograms obtained from the tests for determining the gelation and melting temperatures describe an extremely interesting behaviour of the anti-icing mixtures for the specific use for which they were conceived.

By heating the anti-icing mixtures, three slight endothermic peaks are observed in the temperature range 70-100 °C, at the gel-liquid phase transitions presumably attributable to different bioactive compounds of the algae fibre matrix and by the polymer chain breakdown process and subsequent random re-aggregation.

Similarly, during the subsequent cooling of the sample, two main sol-gel transition peaks are noted ($T_{on\_1} \approx 60$ °C and $T_{on\_2} \approx 40$ °C) characterized by low enthalpies.

The identified temperature values define some thresholds, important from an operational point of view, within which the product remains in the liquid state and thus sprayable.

Furthermore, the substantial superimposition of the curves in the different heating cycles testifies to the complete thermo-reversibility of the processes. This behaviour provides road operators with good flexibility in the management and storage of the mixture, which can thus also be prepared in advance and stored before application.

*Rheological tests*

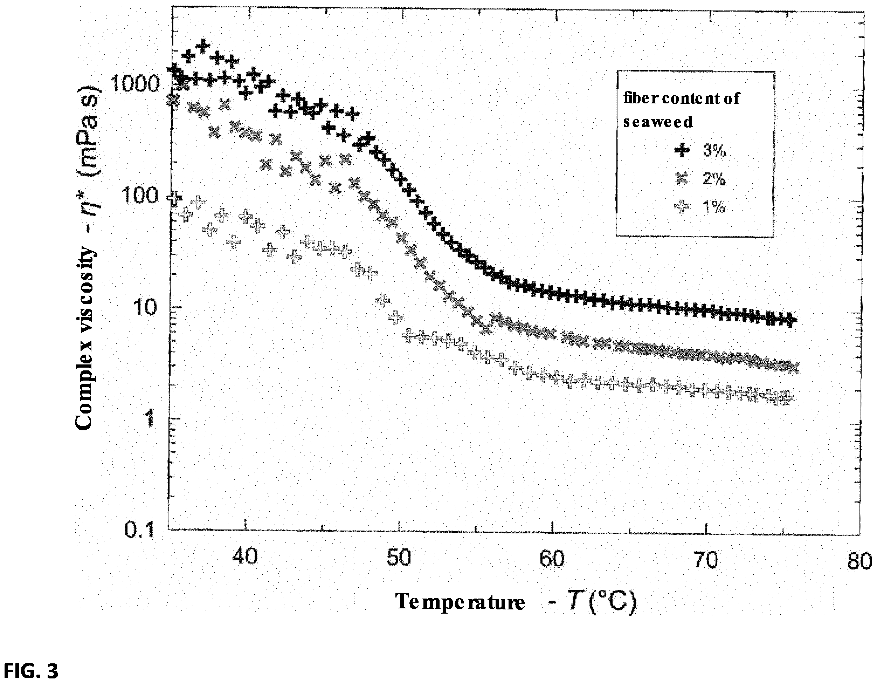

The viscosity trend of the mixtures as a function of temperature is well represented by three linear sections characterized by different slopes, which highlight the phase transitions from the liquid to the solid state, as shown in Figure 3.

During the cooling process, the viscosity of the materials is slowly reduced in the temperature range 75-55 °C.

Although the viscosity trend does not seem to be influenced by the salt and gelling agent concentrations, the absolute value of viscosity shows growing increases as the content of sodium chloride and algae fibre increases.

A further reduction in temperature is associated with a sudden and significant increase in viscosity, which denotes the occurrence of a rapid gelation process.

The temperature of about 50-55 °C, determined by the tangent crossing method, corresponds to the gelation point, i.e., the temperature below which the mixture begins to form a gel-like structure. This value is significant from an operational point of view, since it defines a threshold above which the product can be applied in liquid form.

The oscillatory tests were carried out to study in detail the rheological behaviour of the anti-icing mixtures once applied on the road pavement at low temperatures.

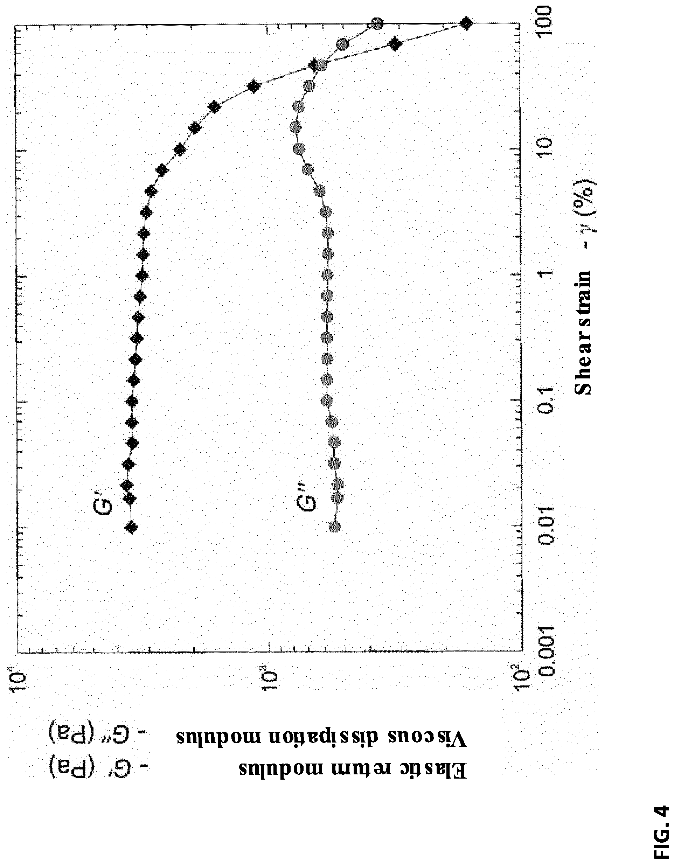

The results of the strain amplitude sweep tests highlight the gel-like character of the mixtures: the elastic behaviour dominates over the viscous one (G' > G") up to the maximum deformation value ($\gamma_L$), which defines the limit of the linear viscoelastic region (LVE). Unlike the G'($\gamma$) curve, which shows a constant plateau followed by a sudden decrease, G" curve does not follow a monotonous trend downwards as the strain increases, but shows a little evident peak before significantly decreasing (Figure 4).

This behaviour, which is very frequent in jelly, can be due to the relative motion between the not-linked particles in the network.

However, the stiffness of the gel is affected both by the salt and thickener contents.

Specifically, the measured complex modulus values (G*) decrease with the increasing the concentration of sodium chloride, while, as is expected, a greater addition of algae fibre produces the opposite phenomenon.

A typical behaviour of materials with gel structure is also evidenced by the trends of the moduli curves determined with frequency sweep tests.

These tests highlighted how the mixtures maintain the same structure and consistency at very low temperatures (below zero) until their freezing, in which the freezing point is governed by the salt content.

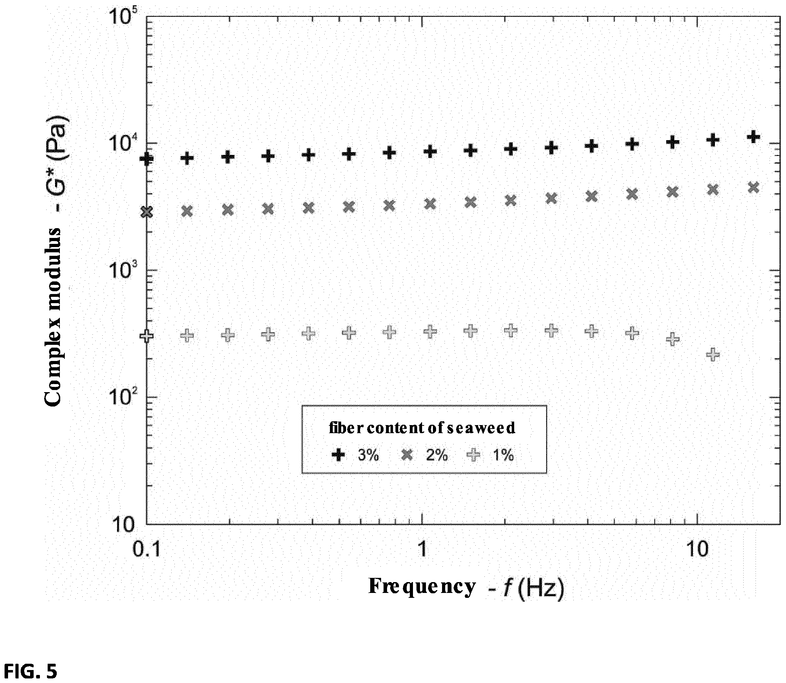

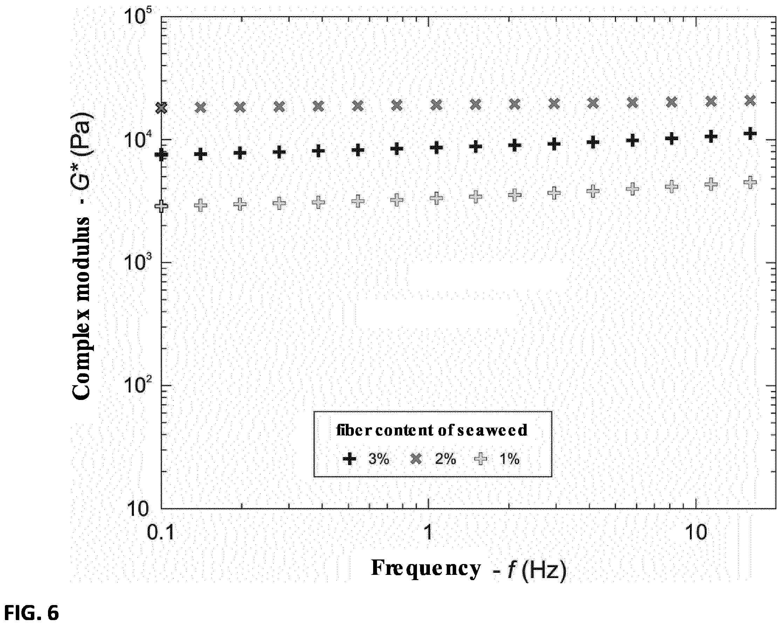

By way of example, trends of the complex modulus as a function of frequency are shown, for the bio-based anti-icing mixture with an algae fibre content equal to 1% - 2% - 3% and a salt content equal to 23.3% (Figure 5) and *2.2%* (Figure 6), at a temperature T = -2°C.

*Permeability measurements*

Since one of the supplementary functions of the bio-based anti-icing mixture is to restore the hydraulic conductivity of the pavement once the critical event is over, its evaluation occurred at different time intervals (2, 6 and 24 hours) after the application of the product on the specimens. Two different storage conditions od specimens were evaluated, namely at laboratory conditions (T = 20 $\pm$ 2 °C; RH = 35 $\pm$ 5%) and at low temperature inside a refrigerator (T = 2 $\pm$ 0.5 °C; RH = 25 $\pm$ 3%).

The determination of hydraulic conductivities before the application of the mixture, on the whole set of prepared specimens, allows to define the reference condition.

The air permeability value is almost constant and equal to $K_a$ = 3.6 $\pm$ 0.5 mm/s, while the water permeability value is $K_w$ = 17.8 $\pm$ 0.1 mm/s.

By way of example, some significant results of the fluid which showed a suitable behaviour emerged from the thermal and rheological analyses are briefly summarized, i.e., the anti-icing mixture with high sodium chloride content (23.3% by weight of water) and an amount of algae fibre equal to 2% by weight of water.

The analysis of the results shows how the application of the mixture on the specimens leads to a higher reduction in hydraulic conductivity (about 20%) immediately and in the first hours after treatment.

However, this variation does not change the order of magnitude of the hydraulic conductivity and the absolute value falls largely within those required in the main road specifications for the open-graded layers (Table 1).

Furthermore, a particularly unfavourable condition was considered, namely that in which the gel remains undisturbed on the pavement without any perturbing actions.

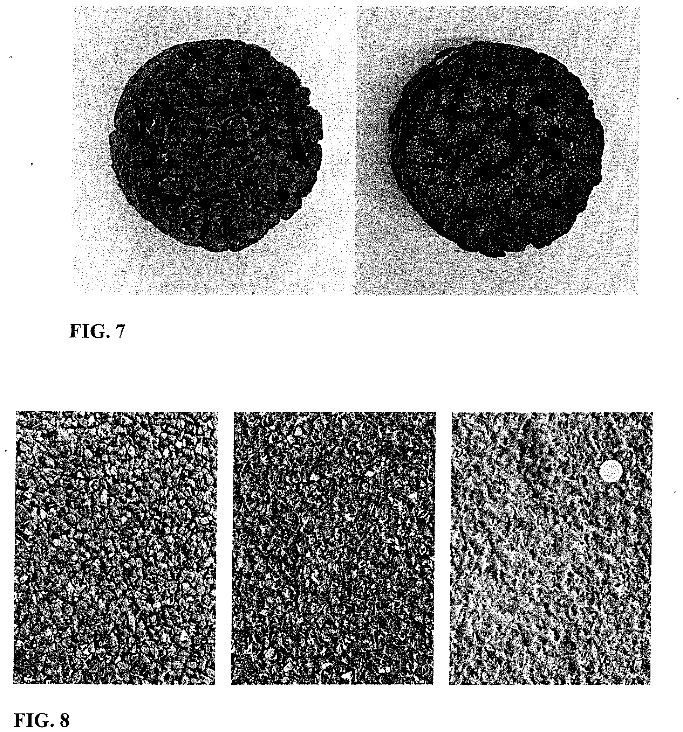

A few hours after application, the mixture tends to release the aqueous component, leaving a part of salt and fibre initially contained in the gel on the HMA specimen (Figure 7).

This evidence translates into a complete restoration of the hydraulic conductivity of the pavement.

*Table 1 - Average air hydraulic conductivity value $K_a$ and water hydraulic conductivity value $K_w$ and relative reduction $DK_a$ and $DK_w$ with respect to the reference value of the untreated specimen.*

| Reference | Average value | | | | Average reduction | | | |
|---|---|---|---|---|---|---|---|---|
| | $K_a$ (m/s) | | $K_w$ (m/s) | | D $K_a$ (m/s) | | D $K_w$ (m/s) | |
| | 0.0037 | | 0.0180 | | - | | - | |
| | Storage temperature of the specimens | | | | | | | |
| | 20°C | 2°C | 20°C | 2°C | 20°C | 2°C | 20°C | 2°C |
| t = 0 | 0.0029 | 0.0029 | 0.0149 | 0.0157 | -16% | -22% | -23% | -22% |
| t = 2h | 0.0032 | 0.0032 | 0.0173 | 0.0167 | -19% | -16% | -17% | -17% |
| t = 6h | 0.0035 | 0.0038 | 0.0194 | 0.0194 | -9% | -1% | -11% | -2% |
| t = 24h | 0.0035 | 0.0037 | 0.0191 | 0.0192 | -4% | -3% | -2% | -3% |

The verification of the actual possibility of producing large amounts of anti-icing mixture added with small dosages of algae fibre, of transporting it in liquid form from the point of production and storage to the point of application, and of verifying its ability to develop a gel-like structure after spreading on a cold surface, required a direct validation on an existing porous asphalt pavement. Specifically, it was decided to test one of the mixtures which showed the best behaviours in the laboratory phase.

Following the laboratory characterization, the most efficient application method was found to be the spraying technique. However, an optimal spray application of a thermo-dependent product requires several operational arrangements.

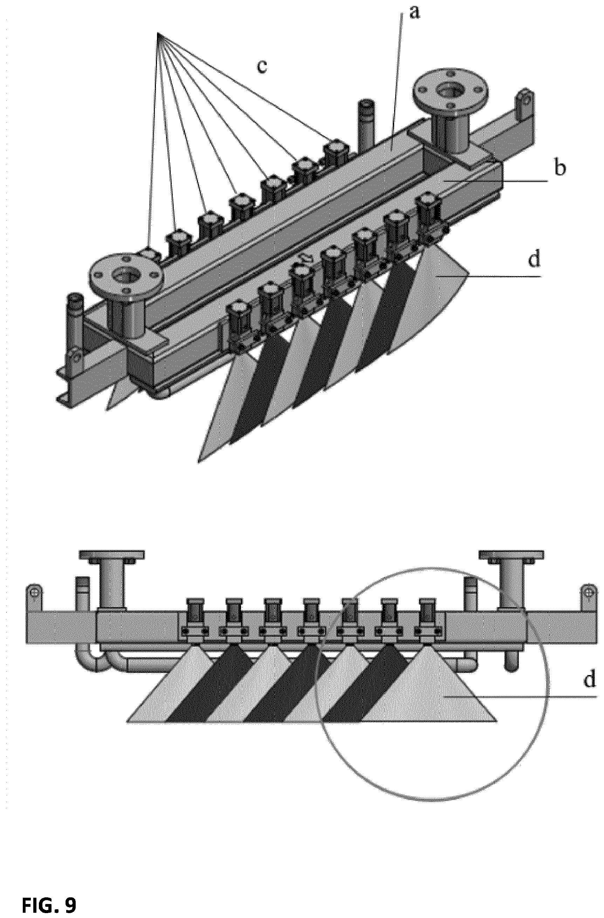

For the application of the anti-icing solution, in accordance with what is described above, a specific equipment was configured and used which comprises a motorized vehicle provided with a control panel, a vehicle speed detector, a heated tank for storing the solution in liquid phase at a temperature higher than the gelation temperature, and a spray system for spraying the liquid solution on the road pavement (figure 9), where this system comprises at least one horizontal bar (a)(b) mounted rear to the vehicle, provided with a plurality of spray nozzles (c) facing the road pavement, and where the controller is configured to adjust the flow rate of the atomized liquid solution according to the detected speed of the vehicle.

In particular, the vehicle was provided with a heated tank, capable of providing heat to the mixture to keep it in liquid form, and a spraying system designed to uniformly release the hot product in liquid form (65 °C < T < 85 °C).

To this end, a tank truck prototype equipped with a 500-litre reservoir with heating capacity and a specific customized spraying system was developed, as illustrated in figure 9.

The spraying system was designed as a device with the possibility of vertical and transverse adjustment with a double bar, to be mounted behind the vehicle, provided with a plurality of nozzles capable of spraying the mixture so that the individual spray pattern did not touch and interfere each other in the longitudinal direction. Specifically, the tests, were carried out using a double bar system (figure 9), with the bars (a)(b) spacing of 30 cm, provided with 7+7 nozzles (c) (10 cm spacing), which ensures a nominal pavement coverage of 95.4 cm, assuming a spraying angle (d) of 85° with respect to the vertical axis.

The nozzles were operated from the driver's cab using a control panel, which allows the adjustment of the pressure and the amount of material to be released, the flow rate of which was automatically adjusted according to the speed of the vehicle.

The on-site tests were carried out on a section of the Italian A15 motorway "Autocamionale della Cisa" which connects Parma to La Spezia through the valleys of the Taro and Magra rivers.

The section of the south carriageway falls within the municipality of Medesano (progressive from 17+500 to 19+500 km).

The pavement tested consists of an open-graded asphalt layer (maximum nominal aggregate size of 10 mm), characterized by a particle size distribution with 66% coarse aggregates (> 12.5/4.75 mm) and 12% sand (0.075/2 mm).

The on-site survey was conducted on a winter day, from 5.00 am to 8.30 am, with ambient and pavement temperatures between -1 and 5°C.

The mixture was applied at a temperature of 80°C $\pm$ 5°C, considering a nominal application dosage of 400 g/m$^2$ and a vehicle forward speed of 20 km/h.

Some subsections of the test field were treated with a double spraying, obtained with a second passage a few minutes after the first application.

The gelation process of the mixture previously observed and studied in the laboratory, actually occurred even on site under less temperature and application controlled conditions, and after having subjected the mixture to high shear stresses due to the passage through the nozzles and the spray application.

The bio-based anti-icing mixture formed a thin gel film capable of filling the superficial pores as soon as it was applied to the cold pavement, while leaving the aggregates exposed.

The second application inevitably led to the formation of a thicker gel which led to a greater coating of the aggregates (Figure 8).

To support the simple visual analysis, experimental skid resistance tests were performed on the pavement, using the British Pendulum Tester.

The surface friction measured before and after the application of the mixture remained unchanged: no significant differences were found between the values of the British Pendulum Number (BPN) measured in the two stages.

The product essentially remained embedded in the voids for at least 3 hours after spraying (without traffic), giving the winter maintenance intervention a longer duration and effectiveness.

Such behaviour would translate into a reduction of salt which should be spread in subsequent applications; alternatively, it could constitute a primer for a subsequent preventive intervention performed using dry granular salt.

In the following 24 hours, in the absence of snowfall and rain, the aqueous component of the gel evaporated, leaving only a thin whitish patina on the pavement due to the salt residues and some unsolved fibrous traces of the gelling agent.

In practice, it has been found that an anti-icing solution for the winter maintenance of open-graded or high macro-textured asphalt pavements according to the invention is particularly advantageous because it has a dual function of anti-icing and temporary sealant.

Another advantage of the invention is that of creating an anti-icing solution for the winter maintenance of open-graded or high macro-textured asphalt pavements with a reduced polluting impact.

Another object of the invention is that of making an anti-icing solution for the winter maintenance of open-graded or high macro-textured asphalt pavements which, by rationalizing the use of salt, decreases the negative impact of the winter maintenance operations on the durability of structures. Another advantage is that of creating an anti-icing solution for the winter maintenance of open-graded or high macro-textured asphalt pavements which allows the retention of a good uniformity of the salt content on the pavement by reducing the amount of dry granular particles blown off target surface by the passage of vehicles.

Last but not least, an advantage of the invention is to create an anti-icing solution for the winter maintenance of open-graded or high macro-textured asphalt pavements which has a low unit treatment cost allows the reduction (or not necessity) of following interventions after the first application.

An anti-icing solution for the winter maintenance of open-graded or high macro-textured asphalt pavements as conceived herein is susceptible to many modifications and variants, all falling within the scope of the inventive concept as defined by the claims; furthermore, all the details are replaceable by technically equivalent elements.

In practice, the materials used, as well as the dimensions, can be any according to the needs and the state of the art.

**Claims**

1. An anti-icing solution for the winter maintenance of open-graded or high macro-textured asphalt pavements, **characterized in that** it comprises a mixture of water, at least one saline solute capable of reducing the freezing point of the mixture and at least one bio-based gelling agent comprising agarose and/or pectin, wherein said gelling agent is contained in the mixture in an effective amount for the thermo-reversible transition of the mixture from a liquid state to a gelatinous state in a cooling process and vice versa in a heating process.

2. The anti-icing solution for the winter maintenance of open-graded or high macro-textured asphalt pavements according to claim 1, **characterized in that** said gelling agent is contained in the mixture in an effective amount for the repeated thermo-reversible transition of the mixture from a liquid state to a gelatinous state in a cooling process and vice versa in a heating process.

3. The anti-icing solution for the winter maintenance of open-graded or high macro-textured asphalt pavements according to any preceding claim, **characterized in that** said gelling agent is contained in said solution in a percentage from 0.5% to 2.0% by weight of water.

4. The anti-icing solution for the winter maintenance of open-graded or high macro-textured asphalt pavements according to any preceding claim, **characterized in that** said saline solute is NaCl.

5. The anti-icing solution for the winter maintenance of open-graded or high macro-textured asphalt pavements according to the preceding claim, **characterized in that** said saline solute is contained in the mixture in a percentage from 0.1% to 25.0% by weight of water.

6. A method for producing an anti-icing solution according to any preceding claim, **characterized by** obtaining said gelling agent from fibres of sea or lake algae, agricultural-derived co-products, by-products from the processing of vegetable or from food, cosmetic, and pharmaceutical industry processes, and adding said gelling agent to a brine consisting of water and the saline solute.

7. The method for applying an anti-icing solution according to any preceding claim, **characterized in that** said solid phase or liquid phase solution is stored at a temperature higher than the gelation temperature, and said solution is sprayed on the road pavement, possibly after having been liquefied if stored in a solid phase.

8. The method for applying an anti-icing solution for the winter maintenance of open-graded or high macro-textured asphalt pavements according to the preceding claim, **characterized in that** the spraying of said liquid solution on the road pavement is carried out by means of nebulization with or without compressed air.

FIG. 1

FIG. 2

**FIG. 3**

EP 4 159 825 A1

**FIG. 4**

**FIG. 5**

**FIG. 6**

**FIG. 7**

**FIG. 8**

**FIG. 9**

Europäisches
Patentamt

European
Patent Office

Office européen
des brevets

# EUROPEAN SEARCH REPORT

Application Number

EP 22 19 8965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/193569 A1 (KOEFOD ROBERT SCOTT [US]) 2 August 2012 (2012-08-02) | 1-7 | INV. C09K3/18 |
| A | * claims 1-12 *<br>* table 1 *<br>* paragraph [0004] * | 8 | |
| A | US 2014/110624 A1 (DEMMER RENÉ LODEWIJK MARIA [NL] ET AL) 24 April 2014 (2014-04-24)<br>* claims 1,3-7 *<br>* paragraph [0038] – paragraph [0040] * | 1-8 | |
| A | US 2020/369932 A1 (KUYKENDALL KEITH C [US] ET AL) 26 November 2020 (2020-11-26)<br>* claims 1-3,6,7 *<br>* paragraphs [0025], [0027] * | 1-8 | |

**TECHNICAL FIELDS SEARCHED (IPC)**

C09K

The present search report has been drawn up for all claims

| Place of search | Date of completion of the search | Examiner |
|---|---|---|
| The Hague | 10 February 2023 | Domínguez Gutiérrez |

EPO FORM 1503 03.82 (P04C01)

## ANNEX TO THE EUROPEAN SEARCH REPORT
## ON EUROPEAN PATENT APPLICATION NO.

EP 22 19 8965

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2023

| Patent document cited in search report | | Publication date | Patent family member(s) | | Publication date |
|---|---|---|---|---|---|
| US 2012193569 | A1 | 02-08-2012 | CA | 2776689 A1 | 14-04-2011 |
| | | | GB | 2486127 A | 06-06-2012 |
| | | | JP | 2013506753 A | 28-02-2013 |
| | | | KR | 20120082439 A | 23-07-2012 |
| | | | US | 2012193569 A1 | 02-08-2012 |
| | | | WO | 2011044135 A1 | 14-04-2011 |
| US 2014110624 | A1 | 24-04-2014 | AR | 086872 A1 | 29-01-2014 |
| | | | AU | 2012266493 A1 | 21-11-2013 |
| | | | CA | 2837707 A1 | 13-12-2012 |
| | | | CN | 103582686 A | 12-02-2014 |
| | | | DK | 2718386 T3 | 02-05-2016 |
| | | | EA | 201391745 A1 | 30-04-2014 |
| | | | EP | 2718386 A1 | 16-04-2014 |
| | | | ES | 2565091 T3 | 31-03-2016 |
| | | | GE | P201606529 B | 25-08-2016 |
| | | | IL | 229183 A | 31-08-2016 |
| | | | JP | 5816361 B2 | 18-11-2015 |
| | | | JP | 2014520181 A | 21-08-2014 |
| | | | KR | 20140033402 A | 18-03-2014 |
| | | | MD | 20130101 A2 | 30-04-2014 |
| | | | NZ | 617459 A | 27-02-2015 |
| | | | PL | 2718386 T3 | 29-07-2016 |
| | | | US | 2014110624 A1 | 24-04-2014 |
| | | | WO | 2012168205 A1 | 13-12-2012 |
| | | | ZA | 201308941 B | 26-11-2014 |
| US 2020369932 | A1 | 26-11-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GIULIANI, F. ; PETROLO, D. ; CHIAPPONI, L. ; ZANINI, A. ; LONGO, S.** Advancement in measuring the hydraulic conductivity of porous asphalt pavements. *Construction and Building Materials,* 2021, vol. 300, 124110